# EUROPEAN PATENT SPECIFICATION

(11) **EP 3 929 669 B1**
(45) Date of publication and mention of the grant of the patent: **02.09.2026**
(21) Application number: 20759105.8
(22) Date of filing: 19.02.2020
(51) Int. Cl.: G05B 13/04, G05B 13/02

(54) **INFORMATION PROCESSING DEVICE, INFORMATION PROCESSING METHOD, AND INFORMATION PROCESSING PROGRAM**
INFORMATIONSVERARBEITUNGSVORRICHTUNG, INFORMATIONSVERARBEITUNGSVERFAHREN UND INFORMATIONSVERARBEITUNGSPROGRAMM
DISPOSITIF DE TRAITEMENT D'INFORMATIONS, PROCÉDÉ DE TRAITEMENT D'INFORMATIONS ET PROGRAMME DE TRAITEMENT D'INFORMATIONS

(30) Priority: 19.02.2019 JP 2019027562
(43) Date of publication of application: 29.12.2021
(73) Proprietor: Kanadevia Corporation, Osaka-shi, Osaka 559-8559 (JP)
(72) Inventor: DAI, Yingda, Osaka-shi, Osaka 5598559 (JP); UMANO, Motohide, Osaka-shi, Osaka 5598559 (JP); KAWABATA, Kaoru, Osaka-shi, Osaka 5598559 (JP); SAITO, Hideki, Osaka-shi, Osaka 5598559 (JP); IZAKI, Yoshihiro, Osaka-shi, Osaka 5598559 (JP); TOMIMATSU, Kazuo, Osaka-shi, Osaka 5598559 (JP)
(74) Representative: Grünecker Patent- und Rechtsanwälte PartG mbB
(86) International application number: PCT/JP2020/006428
(87) International publication number: WO 2020/171104

(56) References cited:
- GB-A- 2 535 769
- JP-A- 2000 181 526
- JP-A- 2000 222 005
- JP-A- 2016 051 473
- JP-A- 2018 119 924
- JP-A- 2018 160 078
- JP-A- H05 282 269
- US-A1- 2017 068 886
- US-A1- 2017 068 886

## Description

### Technical Field

The present invention relates to an information processing device and the like that predict a parameter value related to a process in a plant.

### Background Art

In various plants, various techniques for appropriately controlling the plants have been researched and developed. For example, Patent Literature 1 listed below discloses the technique in which, in the operation control of a treatment plant facility that performs various treatments such as a waste treatment plant and a water treatment plant, various process data are introduced into a learned model composed of a neural network to perform predictive operation control.

US 2017/068886 A1 relates to a power generation system comprising a steam turbine power generation unit having a turbine steam inlet system, a steam turbine coupled to the turbine steam inlet system and powered by steam from the turbine steam inlet system, and a steam outlet; an electrical energy generation unit mechanically coupled to the steam turbine and adapted to produce an electrical energy load based on movement of the steam turbine. GB 2 535 769 A relates to a method and apparatus for controlling an environment management system within a building. JP 2018 160078 A relates to an abnormality detection device for detecting an abnormality in an object operating with a communication network.

### Citation List

### [Patent Literature]

[Patent Literature 1]
Japanese Patent Application Publication Tokukai No. 2005-242524

### Summary of Invention

### Technical Problem

According to the technique of Patent Literature 1, highly accurate prediction about a process showing a non-linear behavior can be performed by using a learned model composed of a neural network. However, the prediction accuracy of the learned model depends on what kind of content has been learned. Thus, if input data belonging to a range such that no learning has been performed or if input data belonging to a range such that insufficient learning has been inputted to the learned model, the prediction accuracy decreases.

Particularly, the prediction value based on the learned model may be an unrealistic value. If control is performed based on such an unrealistic value, there is a concern that the operation of the plant may be seriously hindered. As described above, the prediction using only the learned model has a problem in reliability.

An aspect of the present invention has been attained in view of the above problem, and an object of an aspect of the present invention is to realize an information processing device and the like capable of achieving both reliability and accuracy in prediction of a parameter in a plant.

### Solution to Problem

In order to solve the above problem, an information processing device in accordance with an aspect of the present invention is defined in independent claim(s).

In order to solve the above problem, an information processing method in accordance with an aspect of the present invention is defined in independent method claim. Advantageous Effects of Invention

An aspect of the present invention produces the effect of achieving both reliability and accuracy in prediction of a parameter.

### Brief Description of Drawings

Fig. 1 is a block diagram illustrating an example of a configuration of a main part of an information processing device in accordance with an embodiment of the present invention.
Fig. 2 is a diagram illustrating an example of a superheater that superheats steam in three stages and an example of a prediction model corresponding to the superheater.
Fig. 3 is a view for explaining the determination of a prediction result obtained by a prediction value determination section.
Fig. 4 is a graph showing a prediction result of a steam outlet temperature by the information processing device and an actually measured value of the steam outlet temperature.
Fig. 5 is a flowchart showing an example of processes performed by the information processing device.
Fig. 6 is a view for explaining the sections involved in prediction in an information processing device in accordance with Embodiment 2 of the present invention.
Fig. 7 is a graph showing an example of time-series changes in the steam outlet temperature and the pressure in a high-pressure steam reservoir during a normal operation period and a soot blow operation period.
Fig. 8 is a view for explaining details of control performed by an FB control section and an MPC section.
Fig. 9 is a block diagram illustrating an example of a configuration of a main part of an information processing device in accordance with Embodiment 4 of the present invention.

### Description of Embodiments

### [Embodiment 1]

### <Configuration of information processing device>

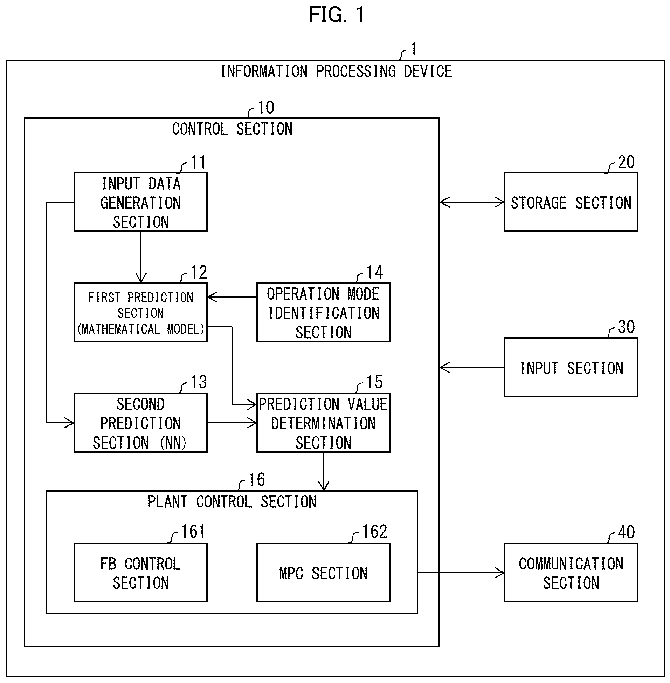

An information processing device in accordance with the present embodiment will be described with reference to Figs. 1 to 5. Fig. 1 is a block diagram illustrating an example of a configuration of a main part of the information processing device 1 in accordance with the present embodiment. The information processing device 1 is a device that calculates a prediction value of a predetermined parameter related to a predetermined process in a plant.

The description in the present embodiment will discuss an example in which the above plant is a waste incineration plant that incinerates waste and generates electricity with use of heat generated by the incineration. Further, the description in the present embodiment will discuss an example in which the predetermined process is a process of superheating steam generated in a boiler to a predetermined temperature by a superheater (hereinafter referred to as a steam superheating process). Further, the description in the present embodiment will describe an example in which the predetermined parameter is a steam temperature near an outlet of the superheater (hereinafter referred to as a steam outlet temperature).

As illustrated in Fig. 1, the information processing device 1 includes: a control section 10 that centrally controls individual sections of the information processing device 1; and a storage section 20 that stores various data used by the information processing device 1. The information processing device 1 further includes: an input section 30 that accepts an input operation to the information processing device 1; and a communication section 40 for the information processing device 1 to communicate with another device.

Further, the control section 10 includes an input data generation section 11, a first prediction section 12, a second prediction section 13, an operation mode identification section 14, a prediction value determination section 15, and a plant control section 16. The plant control section 16 includes an FB control section 161 and an MPC section 162. The operation mode identification section 14 will be described in Embodiment 2, and the FB control section 161 and the MPC section 162 will be described in Embodiment 3. That is, the operation mode identification section 14, the FB control section 161, and the MPC section 162 are preferable components, but are not essential components.

The input data generation section 11 generates input data used for prediction by the first prediction section 12 and input data used for prediction by the second prediction section 13. Alternatively, the input data used for prediction by the first prediction section 12 and the input data used for prediction by the second prediction section 13 may be generated by different input data generation sections. The input data is basically actual measurement data measured by a sensor or the like installed in the plant. The actual measurement data may be inputted via the input section 30 or may be received via the communication section 40.

However, the input data generation section 11 may use a mathematical model, without using the actual measurement data, to calculate at least part of input data for at least one of a mathematical model used by the first prediction section 12 and a learned model used by the second prediction section 13. This makes it possible to include data that is difficult to actually measure in the input data and further improve the accuracy of the prediction value.

For example, if a flow rate of steam flowing in the superheater is known, the steam temperature near the outlet of the superheater can be predicted more accurately than when the flow rate is not known. However, there are cases where it is difficult to actually measure the flow rate. In such cases, a mathematical model for calculating the flow rate of the steam may be generated using another parameter (for which actual measurement data can be acquired) correlated with the flow rate of the steam. This allows the input data generation section 11 to calculate the flow rate of the steam with use of the mathematical model and include the calculated flow rate in the input data.

The first prediction section 12 calculates a first prediction value, which is a prediction value of a predetermined parameter related to a predetermined process in the plant, with use of a mathematical model. This mathematical model is a model obtained by modeling the above process. Specifically, the first prediction section 12 calculates a prediction value of the steam outlet temperature in the steam superheating process. Since the first prediction section 12 uses the mathematical model, the first prediction section 12 is less likely to calculate an unrealistic prediction value and can stably calculate a highly reliable prediction value.

The second prediction section 13 calculates a second prediction value, which is a prediction value of the above parameter, with use of a learned model which is obtained by modeling the above process by machine learning. Since the second prediction section 13 uses the learned model, the second prediction section 13 can calculate a highly accurate prediction value for the process showing a non-linear behavior.

Specifically, the learned model is generated by machine-learning a neural network (hereinafter referred to as NN) so that a prediction value of the steam outlet temperature in the steam superheating process can be calculated. Such a learned model can be generated by machine learning using teaching data that associates input data correlated with the steam outlet temperature, such as the steam temperature near a steam inlet of the superheater, with correct answer data that indicates the steam outlet temperature at that time. As actual measurable data, such as the steam outlet temperature and a steam inlet temperature, included in the teaching data, actual measurement data actually measured at the waste incineration plant may be used. Further, data calculated by a predetermined mathematical model generated by the input data generation section 11 may be included in the input data.

The algorithm used for the learned model is not particularly limited, and for example, a convolutional neural network, a recurrent neural network, or a combination of these neural networks can be employed. Further, a machine learnable algorithm other than NN may be used, and for example, a long short-term memory (LSTM) can be employed.

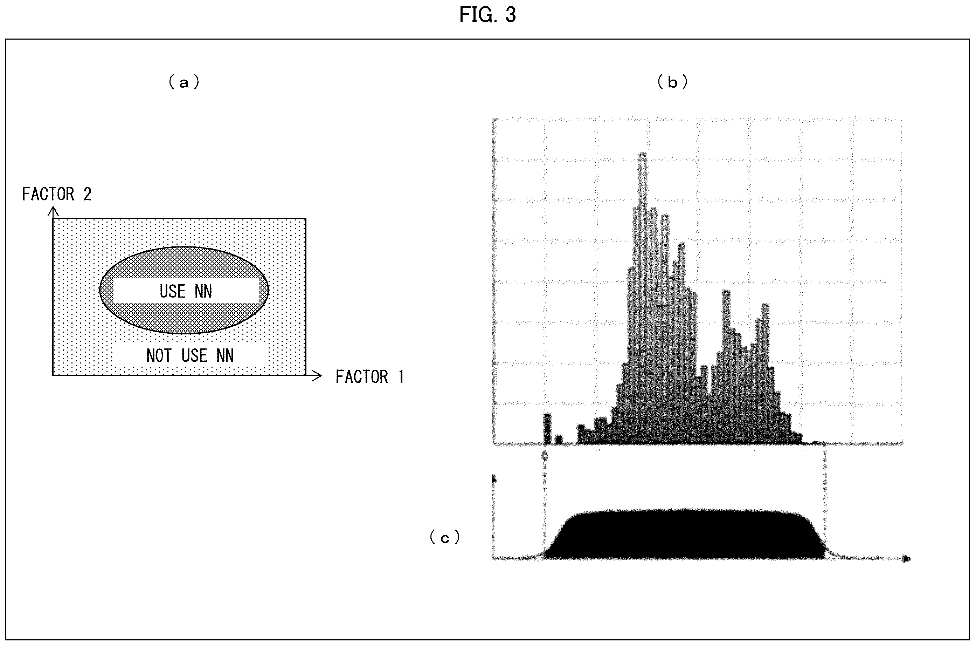

The prediction value determination section 15 determines the prediction value of the parameter based on at least one of the first prediction value calculated by the first prediction section 12 and the second prediction value calculated by the second prediction section 13. A method of determining the prediction value of the parameter will be described later with reference to Fig. 3.

The plant control section 16 controls the plant based on the prediction value determined by the prediction value determination section 15. Since the plant control section 16 controls the plant based on the highly reliable and highly accurate prediction value determined by the prediction value determination section 15, the plant control section 16 can perform appropriate control. Further, since the plant control section 16 performs control based on the prediction value, the plant control section 16 can perform control (for example, feedforward control) at an earlier timing than the feedback control based on the actual measurement value. Although the control performed by the plant control section 16 will be described in detail in Embodiment 3, the plant control section 16 may also perform feedback control in addition to the above control based on the prediction value.

### <Configuration example of superheater and prediction model>

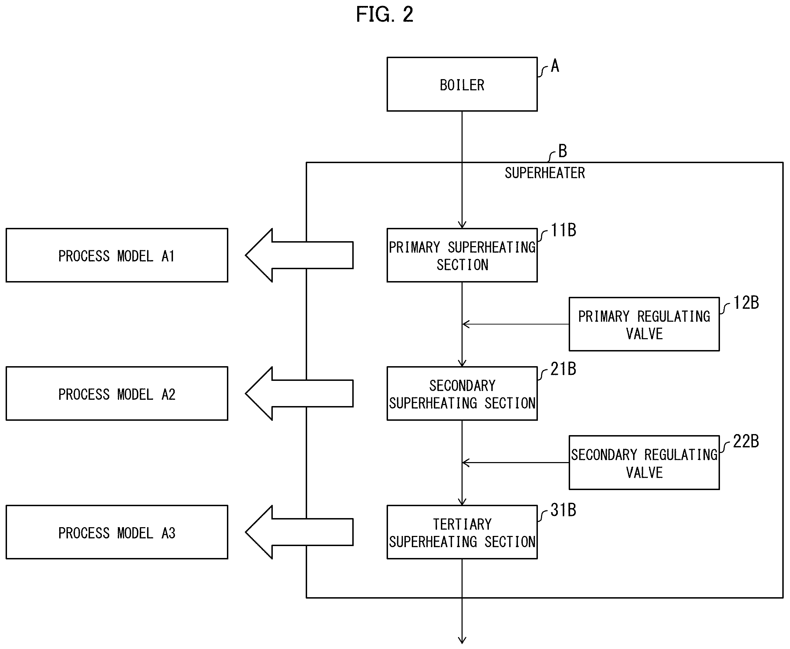

A configuration example of the superheater and a prediction model corresponding to the superheater will be described with reference to Fig. 2. Fig. 2 is a diagram illustrating an example of a superheater B that superheats steam in three stages and an example of a prediction model corresponding to the superheater B. In addition, Fig. 2 also illustrates a boiler A that generates steam by heat generated by incineration of waste.

The steam generated by the boiler A is introduced into the superheater B and is superheated to a predetermined temperature. Then, the superheated steam discharged from the superheater B is temporarily stored in a high-pressure steam reservoir (accumulator) (not illustrated), and then supplied to a steam turbine generator (not illustrated). In order for the steam turbine generator to stably generate electricity, it is necessary to maintain the temperature of the steam supplied to the steam turbine generator at a predetermined temperature.

The superheater B illustrated in Fig. 2 includes a primary superheating section 11B, a primary regulating valve 12B, a secondary superheating section 21B, a secondary regulating valve 22B, and a tertiary superheating section 31B. The steam introduced into the superheater B is superheated sequentially by the primary superheating section 11B, the secondary superheating section 21B, and the tertiary superheating section 31B, and is then discharged to the outside of the superheater B. The primary regulating valve 12B is a valve for regulating the supply amount of a coolant (for example, water) for cooling the steam superheated by the primary superheating section 11B. Similarly, the secondary regulating valve 22B is a valve for adjusting the supply amount of the coolant for cooling the steam superheated by the secondary superheating section 21B. The plant control section 16 appropriately adjusts the opening degree of these valves based on the prediction value of the steam outlet temperature determined by the prediction value determination section 15. This makes it possible to maintain the steam discharged to the outside of the superheater B at a predetermined temperature.

In a case where the steam superheating process is a process of superheating steam in multiple stages as in the example of Fig. 2, predicting the steam outlet temperature by using a combination of prediction models corresponding to the individual stages is preferable from the viewpoint of improving the accuracy of the prediction. For example, as illustrated in Fig. 2, the steam outlet temperature may be predicted by using a combination of process models A1 to A3.

The process model A1 is a model obtained by modeling the steam superheating process by the primary superheating section 11B. More specifically, the process model A1 is a model for predicting the steam temperature near the outlet of the primary superheating section 11B from input data correlated with the superheating process, such as the steam temperature near the inlet of the superheater B. Hereinafter, the steam superheating process performed by the primary superheating section 11B will be referred to as a primary superheating process. Similarly, the superheating process performed by the secondary superheating section 21B and the superheating process performed by the tertiary superheating section 31B are referred to as a secondary superheating process and a tertiary superheating process, respectively.

The process model A2 is a model obtained by modeling the secondary superheating process. More specifically, the process model A2 is a model for predicting the steam temperature near the outlet of the secondary superheating section 21B from input data correlated with the secondary superheating process, such as the steam temperature near the outlet of the primary superheating section 11B and/or the opening degree of the primary regulating valve 12B.

The process model A3 is a model obtained by modeling the tertiary superheating process. More specifically, the process model A3 is a model for predicting the steam temperature near the outlet of the superheater B from input data correlated with the tertiary superheating process, such as the steam temperature near the outlet of the secondary superheating section 21B and/or the opening degree of the secondary regulating valve 22B.

Here, the steam temperature near the outlet of the primary superheating section 11B predicted by the process model A1 is used as the input data of the process model A2. Further, the steam temperature near the outlet of the secondary superheating section 21B predicted by the process model A2 is used as the input data of the process model A3. In this way, by using the prediction result of the process model A1 for the prediction of the process model A2 and the prediction result of the process model A2 for the prediction of the process model A3, the prediction of the entire steam superheating process (prediction of the steam temperature near the outlet of the superheater B) can be performed.

As described above, the process for which the parameter is predicted (steam superheating process performed by the superheater B) may include a plurality of sub-processes (primary to tertiary superheating processes). In such a case, the first prediction section 12 and the second prediction section 13 may perform prediction by a combination of models corresponding to individual sub-processes (process models A1 to A3).

In this case, the first prediction section 12 makes a prediction using the process models A1 to A3, which are mathematical models. As a result, it is possible to make a highly accurate prediction as compared with the case where the steam superheating process is expressed by one mathematical model.

Similarly, the second prediction section 13 makes a prediction using the process models A1 to A3, which are learned models generated by machine learning. This makes it possible to make a highly accurate prediction as compared with the case where the steam superheating process is expressed by one learned model.

### <Determination of prediction value of parameter>

Since various factors are involved in various processes in the plant, including the steam superheating process, it is desirable to include various factors in the teaching data used for machine learning. However, the actual measurement data measured at the plant may be missing or unrecorded in a part of a numerical range. Thus, when a learned model that reflects various factors is generated by using a plurality of types of actual measurement data as the teaching data, the accuracy of the output data for the input data in the part of the numerical range may decrease.

In view of this, if the actual measurement data used for the calculation of the second prediction value by the second prediction section 13 falls within the range of the teaching data used for machine learning of the learned model, the prediction value determination section 15 determines the second prediction value as the prediction value of the parameter. On the other hand, if the actual measurement data used for the calculation of the second prediction value by the second prediction section 13 falls outside the range of the teaching data used for machine learning of the learned model, the prediction value determination section 15 determines the first prediction value as the prediction value of the parameter.

As a result, in a situation where the actual measurement data inputted to the learned model falls within the range of the teaching data used for machine learning, and the calculated second prediction value is expected to be highly reliable and highly accurate, the second prediction value can be determined as the prediction value of the parameter. Then, in a situation where the actual measurement data inputted to the learned model falls outside the range of the teaching data used for machine learning, and it is difficult to expect that the calculated second prediction value is highly reliable and accurate, the first prediction value can be determined as the prediction value of the parameter. Therefore, according to the above configuration, both reliability and accuracy can be achieved in the prediction of the parameter.

The method of determining the prediction value of the parameter will be described with reference to Fig. 3. Fig. 3 is a view for explaining the determination of a prediction result obtained by the prediction value determination section 15. (a) of Fig. 3 illustrates an example of a criterion by which to determine whether or not to use the NN (whether or not to use the second prediction value based on the learned model) based on a plurality of factors included in the teaching data. Both of the factors 1 and 2 illustrated in (a) of Fig. 3 are factors included in the input data for the learned model. Examples of these factors include the steam temperature near the inlet of the superheater B, the temperature of an exhaust gas generated in the incinerator and used as a heat source of the superheater B, and the like.

As illustrated in (a) of Fig. 3, the prediction value determination section 15 preferably determines whether or not to use the NN according to a combination of a value of the factor 1 and a value of the factor 2. More specifically, in a case where the value of the factor 1 in the input data inputted to the learned model is included in the learned range, and the value of the factor 2 in the input data is also included in the learned range, the prediction value determination section 15 preferably determines to use the NN. In such a case, the prediction value determination section 15 determines the second prediction value as the prediction value of the steam outlet temperature. On the other hand, in a case where the value of the factor 1 in the input data inputted to the learned model is not included in the learned range, and the value of the factor 2 in the input data is also not included in the learned range, the prediction value determination section 15 preferably determines not to use the NN. In such a case, the prediction value determination section 15 determines the first prediction value as the prediction value of the steam outlet temperature.

In a case where three or more factors are included in the teaching data, the factor on which the loss of the actual measurement data has a relatively large influence is selected from among these factors, and the prediction value determination section 15 uses the selected factor as a criterion by which to determine whether or not to use the prediction value based on the NN. A technique such as principal component analysis, clustering, or sparse modeling can be used to select the factor on which the loss of the actual measurement data has a relatively large influence.

Further, the prediction value determination section 15 may determine the prediction value according to whether or not the input data belongs to a numerical range for which machine learning is done with a relatively large amount of teaching data. This will be described with reference to (b) and (c) of Fig. 3. (b) of Fig. 3 illustrates a correspondence between the steam temperature (horizontal axis) near the inlet of the superheater B and the number of pieces of teaching data (vertical axis) of the steam temperature. Further, (c) of Fig. 3 illustrates a correspondence between the steam temperature (horizontal axis) near the inlet of the superheater B, included in the input data, and the degree of contribution (vertical axis) of the second prediction value to the prediction value determined by the prediction value determination section 15.

When the teaching data is generated from the actual measurement data at the plant, an equal number of pieces of teaching data cannot be obtained for all steam temperatures. As illustrated in (b) of Fig. 3, it is usual that the number of pieces of teaching data is biased toward a median or average value of steam temperatures, and there are a small number of pieces of teaching data at and around a maximum value of the steam temperatures and at and around a minimum value of the steam temperatures.

Thus, in a case where the steam temperature included in the input data falls within the range of the steam temperature in which the number of pieces of teaching data is relatively large, the prediction value determination section 15 preferably increases the degree of contribution of the second prediction value. For example, in a case where the degree of contribution when the second prediction value is not used (only the first prediction value is used) is 0 and the degree of contribution when only the second prediction value is used is 1, the degree of contribution at and around the median value of the steam temperatures or at and around the average value of the steam temperatures is preferably set to 1 or a value close to 1.

On the other hand, in a case where the steam temperature included in the input data falls within the range of the steam temperatures in which the number of pieces of teaching data is relatively small, the prediction value determination section 15 preferably decreases the degree of contribution of the second prediction value. Then, in a case where the steam temperature included in the input data falls within the range of the steam temperatures in which no teaching data exists, the prediction value determination section 15 preferably sets the degree of contribution of the second prediction value to 0.

In the example of (c) of Fig. 3, the degree of contribution is maximized at and around the median or average value of the steam temperatures, and the degree of contribution is gradually decreased as the steam temperature goes away from the median or average value. The degree of contribution is sharply decreased at and around the end of the range of steam temperatures. By setting the degree of contribution according to the input data in this way, it is possible to achieve both reliability and accuracy in the prediction of the parameter.

Note that in a case where the prediction value determination section 15 determines the prediction value of the parameter based on the degree of contribution, the prediction value determination section 15 determines the prediction value of the parameter by multiplying the second prediction value by the degree of contribution. For example, in a case where the degree of contribution of the second prediction value is 0.7, the prediction value determination section 15 may determine, as the prediction value of the parameter, a sum of a value obtained by multiplying the second prediction value by 0.7 and a value obtained by multiplying the first prediction value by 0.3. It can be said that this operation is an operation for correcting the first prediction value with the second prediction value.

### <Verification of prediction accuracy>

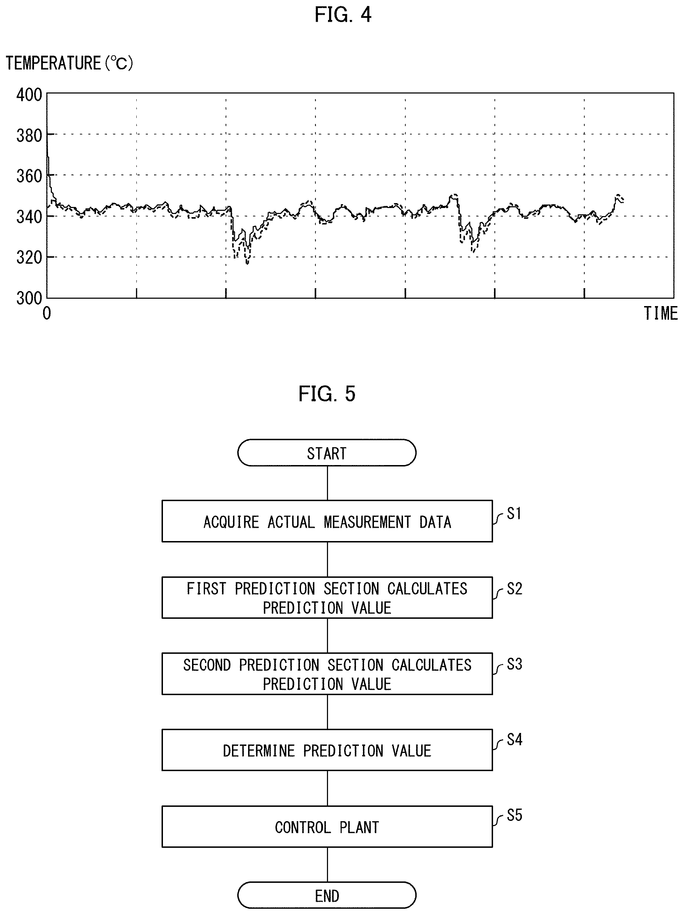

Fig. 4 is a graph showing a prediction result of the steam outlet temperature by the information processing device 1 and an actually measured value of the steam temperature. As shown in Fig. 4, the prediction result (solid line) of the steam outlet temperature by the information processing device 1 is in good agreement with the actually measured value (broken line) of the steam outlet temperature, and it can be seen that the prediction accuracy of the information processing device 1 is high. In Fig. 4, there are two places where the temperature is greatly lowered, and the prediction result and the actually measured value slightly deviate from each other at these places.

The decrease in temperature at the above two places is caused by a soot blow operation performed to remove soot and the like adhering to a heat transfer surface of the superheater B. More specifically, during the soot blow operation, soot and the like are removed by injecting steam onto the heat transfer surface. Thus, the temperature of the heat transfer surface decreases significantly, which in turn decreases the steam outlet temperature. In this way, steam injection which is not performed during the normal operation is performed during the soot blow operation. Thus, the prediction result based on the process model assuming the normal operation may deviate from the actually measured value. A measure for preventing such a deviation will be described in Embodiment 2.

### <Flow of processes>

Next, the flow of processes performed by the information processing device 1 in accordance with the present embodiment will be described with reference to Fig. 5. Fig. 5 is a flowchart showing an example of processes (information processing method) performed by the information processing device 1 in accordance with the present embodiment.

In S1, the input data generation section 11 acquires various actual measurement data that are necessary to generate the input data. Then, the input data generation section 11 generates, from the acquired actual measurement data, the input data used for the prediction by the first prediction section 12 and the input data used for the prediction by the second prediction section 13.

In S2 (first prediction step), the first prediction section 12 inputs, to the mathematical model, the input data generated by the input data generation section 11 and calculates the first prediction value which is the prediction value of the steam outlet temperature. Further, in S3 (second prediction step), the second prediction section 13 inputs, to the learned model, the input data generated by the input data generation section 11 and calculates the second prediction value which is the prediction value of the steam outlet temperature. Note that S2 and S3 may be performed in parallel, or S3 may be performed first.

In S4 (prediction value determination step), the prediction value determination section 15 determines the prediction value of the steam outlet temperature based on at least one of the first prediction value calculated in S2 and the second prediction value calculated in S3.

In S5, the plant control section 16 controls the plant based on the prediction value determined by the prediction value determination section 15. For example, in a case where the prediction value of the steam outlet temperature determined in S4 is higher than the predetermined temperature, the plant control section 16 performs control to increase the opening degree of at least one of the primary regulating valve 12B and the secondary regulating valve 22B. On the other hand, in a case where the determined prediction value of the steam outlet temperature is lower than the predetermined temperature, the plant control section 16 performs control to decrease the opening degree of at least one of the primary regulating valve 12B and the secondary regulating valve 22B. As a result, it is possible to prevent the steam outlet temperature from becoming higher or lower than a predetermined temperature or to minimize the time for which the steam outlet temperature being higher or lower than the predetermined temperature is maintained.

As described above, the information processing device 1 includes: the first prediction section 12 that calculates the first prediction value, which is the prediction value of the steam outlet temperature, by using the mathematical model obtained by modeling the steam superheating process; the second prediction section 13 that calculates the second prediction value, which is the prediction value of the steam outlet temperature, by using the learned model obtained by modeling the steam superheating process by machine learning; and the prediction value determination section 15 that determines the prediction value of the steam outlet temperature based on at least one of the first prediction value and the second prediction value.

The above prediction based on the learned model achieves a high degree of prediction accuracy for a process showing a non-linear behavior. On the other hand, the above prediction based on the mathematical model is a linear prediction, and it is less likely that an unrealistic prediction value is calculated. Therefore, according to the above configuration, it is possible to calculate the prediction value having both reliability and accuracy.

### [Embodiment 2]

Another embodiment of the present invention will be described below. Note that, for convenience, identical reference signs will be given to members having functions identical to those of members described in Embodiment 1, and the members will not be described below. This applies to Embodiment 3 and the subsequent embodiments.

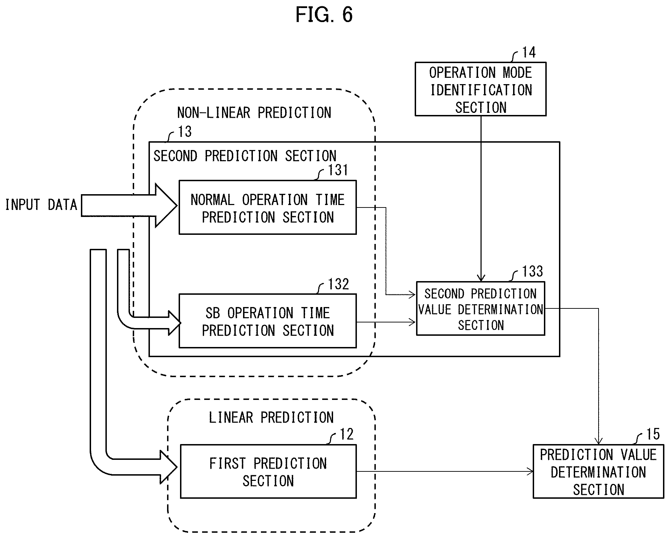

The description in the present embodiment will discuss the identification of the operation mode by the operation mode identification section 14, and the prediction of the steam outlet temperature based on the result of the identification. Fig. 6 is a view for explaining the sections involved in prediction in the information processing device 1 in accordance with the present embodiment. The second prediction section 13 in accordance with the present embodiment includes a normal operation time prediction section 131, an SB operation time prediction section 132, and a second prediction value determination section 133.

The normal operation time prediction section 131 calculates a prediction value of the steam outlet temperature by using a learned model that has been machine-learned with teaching data based on actual measurement data which has been actually measured during a normal operation (during an operation in which steam is superheated by the superheater B without performing soot blow; hereinafter also referred to as a normal operation mode). Further, the SB operation time prediction section 132 calculates a prediction value of the steam outlet temperature by using a learned model that has been machine-learned with teaching data based on actual measurement data which has been actually measured during a soot blow operation (hereinafter also referred to as SB operation mode). Both the prediction performed by the normal operation time prediction section 131 and the prediction performed by the SB operation time prediction section 132 are non-linear predictions using the learned model.

Then, in a case where the operation mode identification section 14 identifies the normal operation mode, the second prediction value determination section 133 determines, as the second prediction value, the prediction value calculated by the normal operation time prediction section 131. On the other hand, in a case where the operation mode identification section 14 identifies the SB operation mode, the second prediction value determination section 133 determines, as the second prediction value, the prediction value calculated by the SB operation time prediction section 132. That is, as a whole of the second prediction section 13, the second prediction value is calculated by using the learned model corresponding to the operation mode identified by the operation mode identification section 14.

As described above, the information processing device 1 in accordance with the present embodiment includes the operation mode identification section 14 that identifies the operation mode of the plant, and the second prediction section 13 calculates the second prediction value by using the learned model corresponding to the operation mode identified by the operation mode identification section 14. In this way, by considering the difference in the operation mode, a highly accurate prediction value can be calculated. For example, even in the soot blow operation period in the example of Fig. 4, it is possible to calculate a prediction value close to the actually measured value.

If mathematical models corresponding to the operation modes are prepared in advance, the first prediction section 12 can be configured, in the same manner as described above, to calculate the first prediction value by using the mathematical model corresponding to the operation mode identified by the operation mode identification section 14. The prediction performed by the first prediction section 12 is a linear prediction. After the first prediction value is calculated by linear prediction and the second prediction value is calculated by non-linear prediction, the prediction value determination section 15 determines the prediction value based on at least one of the first prediction value and the second prediction value, as in the information processing device 1 of Embodiment 1.

### <Identification of operation mode>

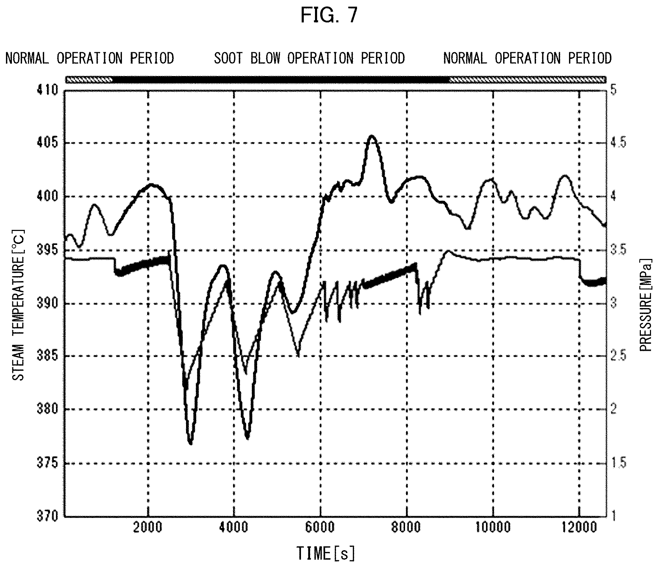

The identification of the operation mode by the operation mode identification section 14 will be described with reference to Fig. 7. Fig. 7 is a graph showing an example of time-series changes in the steam outlet temperature and the pressure in the high-pressure steam reservoir (hereinafter simply referred to as pressure) during the normal operation period and the soot blow operation period. Note that the upper graph of Fig. 7 shows time-series change of the pressure, and the lower graph of Fig. 7 shows time-series change of the steam outlet temperature.

In the example of Fig. 7, steam is injected into the superheater B three times during the soot blow operation period, and the steam outlet temperature and the pressure decrease sharply at each steam injection. Thus, during the soot blow operation period, unique time-series changes in the steam outlet temperature and the pressure are observed. Thus, the operation mode identification section 14 can identify whether the operation mode is the normal operation mode or the SB operation mode based on the time-series changes in the steam outlet temperature and the pressure.

For example, when the pressure has become less than a threshold value (for example, 3.4 [MPa] in the example of Fig. 7), the operation mode identification section 14 may determine that the operation mode has been switched from the normal operation mode to the SB operation mode. Then, when the pressure has become not less than the above threshold value and the duration of the SB operation mode has become equal to or longer than a predetermined lower limit time (at least a time required for a series of soot blow operations), the operation mode identification section 14 may determine that the operation mode has been switched to the normal operation mode.

The method of identifying the operation mode is not limited to the above example. For example, the operation mode identification section 14 may identify the current operation mode by clustering the time-series actual measurement data of the steam outlet temperature and the pressure into the actual measurement data of the SB operation mode and the actual measurement data of the normal operation mode by the variational Bayesian method or the like.

### [Embodiment 3]

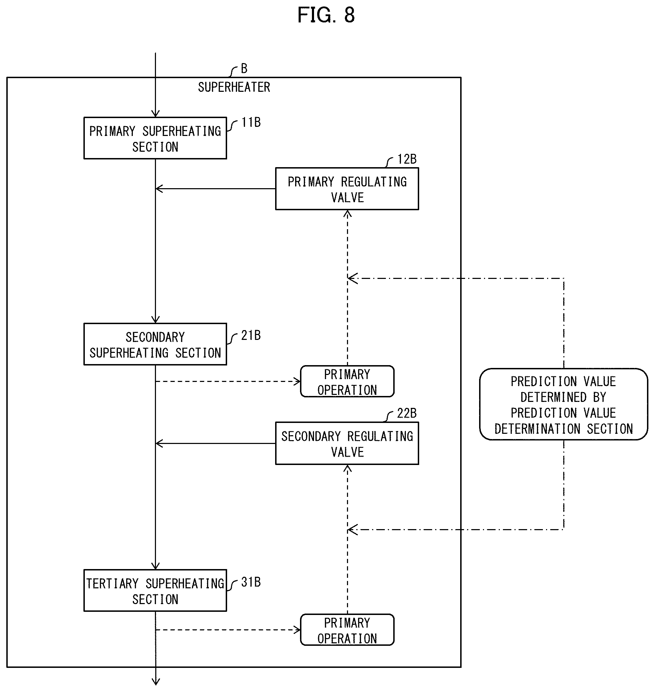

In the present embodiment, details of the control performed by the plant control section 16, particularly details of the control performed by the FB control section 161 and the MPC section 162 included in the plant control section 16 will be described. Fig. 8 is a view for explaining details of the control performed by the FB control section 161 and the MPC section 162.

The FB control section 161 performs feedback control (hereinafter referred to as FB control) based on various actual measurement data actually measured at the plant. In the present embodiment, an example in which the FB control section 161 performs the control shown by broken lines in Fig. 8 will be described. The control performed by the FB control section 161 is feedback control performed every time new actual measurement data is obtained.

Specifically, when the FB control section 161 obtains the actual measurement data of the steam outlet temperature, the FB control section 161 calculates a difference between the actual measurement data and a target value of the steam outlet temperature (primary operation). Then, the FB control section 161 determines the opening degree of the secondary regulating valve 22B according to the difference calculated by the primary operation, and controls the secondary regulating valve 22B so that the secondary regulating valve 22B has the determined opening degree. This control may be, for example, control called proportional-integral-differential (PID) control. Further, the FB control section 161 determines the opening degree of the primary regulating valve 12B in the same manner as described above, and controls the primary regulating valve 12B so that the primary regulating valve 12B has the determined opening degree.

Here, as described with reference to Fig. 2, the steam superheating process performed by the superheater B includes primary to tertiary superheating processes. Further, as a process related to the primary superheating process, there is a steam temperature regulating process via the primary regulating valve 12B, and as a process related to the secondary superheating process, there is a steam temperature regulating process via the secondary regulating valve 22B. Hereinafter, the primary superheating process and the steam temperature regulating process via the primary regulating valve 12B are collectively referred to as a first sub-process, and the secondary superheating process and the steam temperature regulating process via the secondary regulating valve 22B are collectively referred to as a second sub-process.

The MPC section 162 performs state prediction control (hereinafter referred to as model predictive control (MPC)) based on the prediction value determined by the prediction value determination section 15. In this MPC, the MPC section 162 performs control, regarding the first sub-process, for making the prediction value determined by the prediction value determination section 15 closer to a predetermined target value. Further, the MPC section 162 performs control, regarding the second sub-process, for making the prediction value determined by the prediction value determination section 15 closer to a predetermined target value. This makes it possible to appropriately distribute the control amount for each process and realize stable process control.

In Fig. 8, the control performed by the MPC section 162 in accordance with the present embodiment is shown by an alternate long and short dash line. The MPC section 162 determines the respective opening degrees of the primary regulating valve 12B and the secondary regulating valve 22B based on the prediction value of the steam outlet temperature determined by the prediction value determination section 15.

In determining the respective opening degrees of the regulating valves, it is preferable that the MPC section 162 determines the respective opening degrees of the regulating valves so that respective temperature regulation ranges of the regulating valves do not vary greatly. For example, the MPC section 162 may evenly allocate a difference between the prediction value of the steam outlet temperature and the target value of the steam outlet temperature, that is, a temperature range to be adjusted, to the primary regulating valve 12B and the secondary regulating valve 22B.

For example, assume that the difference between the prediction value of the steam outlet temperature and the target value of the steam outlet temperature is -10°C (the prediction value is 10°C lower than the target value). In this case, the MPC section 162 decreases the opening degree of the primary regulating valve 12B so that the steam temperature near the outlet of the secondary superheating section 21B increases by 5°C, and decreases the opening degree of the secondary regulating valve 22B so that the steam temperature near the outlet of the superheater B increases by 5°C.

Further, the temperature of the exhaust gas used as the heat source of the superheater B is a factor that has a large influence on superheating performed by the superheater B, but the temperature of the exhaust gas fluctuates depending on the incineration state in the incinerator and often does not have a constant value. Therefore, the MPC section 162 may identify respective superheat characteristics of the superheating sections from actual measurement data of a current exhaust gas temperature (for example, a temperature near the outlet of a smokestack through which the exhaust gas is discharged to the outside of the incinerator) by using a predetermined prediction model, and then determine control values according to the result of the identification.

The method of determining the opening degree from the prediction value is not particularly limited, and the opening degree can also be determined using a method such as a Kalman filter, NN, linear multiple regression, or logistic regression analysis. For example, in a case where a Kalman filter is used, the opening degree of the primary regulating valve 12B capable of stabilizing the steam outlet temperature can be predicted from the fluctuation of the process such as the temperature of the exhaust gas, and the feedforward control can be performed.

Further, as described above, the respective opening degrees of the primary regulating valve 12B and the secondary regulating valve 22B are also determined by the FB control section 161. Thus, the MPC section 162 finally determines the opening degrees of the regulating valves in consideration of the opening degrees determined by the FB control section 161. For example, the MPC section 162 may set, as each final opening degree, a sum of the opening degree determined by the MPC section 162 and the opening degree determined by the FB control section 161.

### [Embodiment 4]

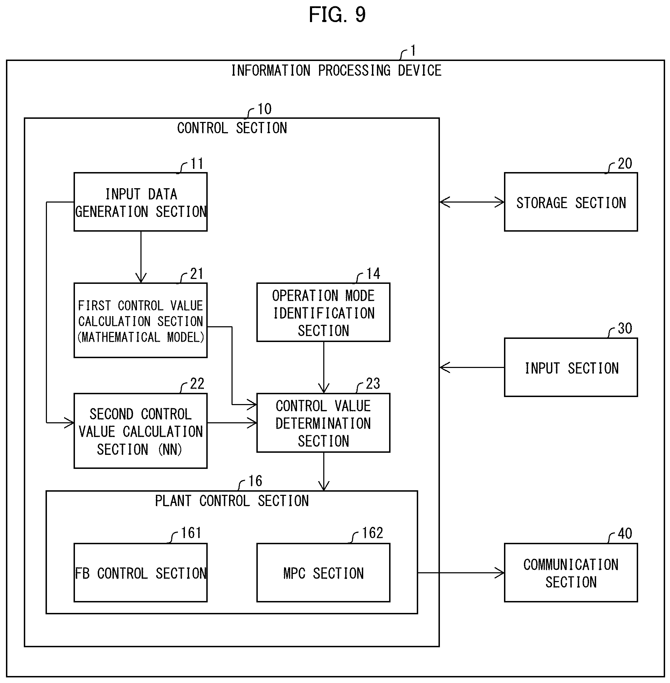

Still another embodiment of the present invention will be described with reference to Fig. 9. Fig. 9 is a block diagram illustrating an example of a configuration of a main part of an information processing device 1 in accordance with the present embodiment. The information processing device 1 in accordance with the present embodiment, as compared with the information processing device 1 in accordance with Embodiment 1 (see Fig. 1), differs in that the first prediction section 12, the second prediction section 13, and the prediction value determination section 15 are replaced by a first control value calculation section 21, a second control value calculation section 22, and a control value determination section 23, respectively.

The first control value calculation section 21 calculates control values used for control of a predetermined process in the plant, by using a mathematical model. Specifically, the first control value calculation section 21 calculates a prediction value (first prediction value) of the steam outlet temperature by using a mathematical model in the same manner as the first prediction section 12 in Embodiment 1. Then, the first control value calculation section 21 calculates respective control values for the primary regulating valve 12B and the secondary regulating valve 22B based on the calculated first prediction value. These control values are the opening degrees of the regulating valves because a target to be controlled is the regulating valves. Hereinafter, the control values calculated by the first control value calculation section 21 are referred to as a first control value.

The second control value calculation section 22 calculates the control values by using a learned model obtained by modeling the above process by machine learning. Specifically, the second control value calculation section 22 calculates a prediction value (second prediction value) of the steam outlet temperature by using the same learned model as used by the second prediction section 13 in Embodiment 1. Then, the second control value calculation section 22 calculates the control values (opening degrees) for the primary regulating valve 12B and the secondary regulating valve 22B based on the calculated second prediction value. Hereinafter, the control values calculated by the second control value calculation section 22 are referred to as a second control value.

The control value determination section 23 determines a control value used for control of the plant based on at least one of the first control value and the second control value. Note that a method in which the control value determination section 23 determines the control value is the same as the method in which the prediction value determination section 15 determines the prediction value.

Then, the plant control section 16 in accordance with the present embodiment controls the plant based on the control value determined by the control value determination section 23, that is, at least one of the first control value and the second control value. As described previously, the above prediction based on the learned model achieves a high degree of prediction accuracy for a process showing a non-linear behavior. The above prediction based on the mathematical model is a linear prediction, and it is less likely that an unrealistic prediction value is calculated. Therefore, according to the above configuration in accordance with the present embodiment, it is possible to determine a control value having both reliability and accuracy and perform accurate control in a stable manner.

Further, the plant control section 16 in accordance with the present embodiment controls the plant based on the operation mode identified by the operation mode identification section 14. Thus, appropriate control can be performed at a timing earlier than the timing at which the FB control is performed, with the difference in the operation mode taken into consideration.

Specifically, the second control value calculation section 22, as in the case of the second prediction section 13 (see Fig. 6) described in Embodiment 2, calculates respective second prediction values by using a learned model for the normal operation mode and a learned model for the SB operation mode. Then, the second control value calculation section 22 calculates the second control value for the normal operation mode and the second control value for the SB operation mode based on the calculated second prediction values, and outputs the second control values to the control value determination section 23.

Then, when the operation mode identified by the operation mode identification section 14 is the SB operation mode, the control value determination section 23 determines a control value used for control of the plant based on at least one of the second control value for the SB operation mode and the first control value outputted from the first control value calculation section 21. With this configuration, the plant is controlled based on the operation mode identified by the operation mode identification section 14.

Note that the first control value calculation section 21, as in the case of the second control value calculation section 22, can calculate the first control value for the normal operation mode by using a mathematical model for the normal operation mode, and can calculate the first control value for the SB operation mode by using a mathematical model for the SB operation mode.

### [Variations]

In each of the above embodiments, an example in which switching is performed between the model used for the normal operation mode and the model used for the SB operation mode has been described. Alternatively, a model to be used can be switched in the same manner for any operation mode characteristic of a target plant. Further, for parameter prediction in the plant, for example, a model in which a control command executed in the plant (in the example of the above embodiment, a control command for the opening degree of the regulating valve) is taken into consideration and a model in which the control command is not taken into consideration may be used. In such a case, during a period in which the control command is executed, the prediction may be performed by using the model in which the control command is taken into consideration, and during a period in which the control command is not executed, the prediction may be performed by using the model in which the control command is not taken into consideration.

Alternatively, some of the functions included in the information processing device 1 described in each of the above embodiments can be provided to a device (for example, a server) external to the information processing device 1, so that an information processing system including the external device and the information processing device 1 is configured. Such an information processing system produces the same effect as that of the information processing device 1. For example, since the arithmetic processing using the NN generally has a high load, the load on the information processing device 1 can be reduced by providing such an arithmetic processing function to the external device. Further, for example, instead of providing the plant control section 16, a plant control device external to the information processing device 1 may be caused to perform plant control.

Further, in each of the above embodiments, an example in which the steam outlet temperature in the waste incineration plant is predicted and an example in which control for making the steam outlet temperature closer to a target value is performed in the waste incineration plant have been described. However, these are merely examples. The plant to be a target for the prediction or control in the present invention is not limited to the waste incineration plant, the target to be predicted is not limited to the steam temperature, and the control is not limited to the control for making the steam temperature closer to the target value.

For example, processes performed in a thermal power generation plant are similar to the processes performed in a waste incineration plant, except that what is burned is changed from waste to a predetermined fuel (oil or coal). Thus, in the same manner as in each of the above embodiments, prediction values of parameters can be calculated for various processes in the thermal power generation plant. Further, the processes in the superheater B can be replaced with processes in a heat exchanger other than the superheater.

### [Software implementation example]

Control blocks (in particular, individual sections included in the control section 10) of the information processing device 1 can be realized by a logic circuit (hardware) provided in an integrated circuit (IC chip) or the like or can be alternatively realized by software.

In the latter case, the information processing device 1 includes a computer that executes instructions of a program that is software realizing the foregoing functions. The computer, for example, includes at least one processor and a computer-readable storage medium storing the program. An object of the present invention can be achieved by the processor of the computer reading and executing the program stored in the storage medium. Examples of the processor encompass a central processing unit (CPU). Examples of the storage medium encompass a "non-transitory tangible medium" such as a read only memory (ROM), a tape, a disk, a card, a semiconductor memory, and a programmable logic circuit. The computer may further include a random access memory (RAM) or the like in which the program is loaded. Further, the program may be supplied to or made available to the computer via any transmission medium (such as a communication network and a broadcast wave) which allows the program to be transmitted. Note that an aspect of the present invention can also be achieved in the form of a computer data signal in which the program is embodied via electronic transmission and which is embedded in a carrier wave.

### [Supplemental remarks]

An information processing device in accordance with an aspect of the present invention includes: a first prediction section configured to, by using a mathematical model obtained by modeling a predetermined process in a plant, calculate a first prediction value, which is a prediction value of a predetermined parameter related to the process; a second prediction section configured to, by using a learned model obtained by modeling the process by machine learning, calculate a second prediction value, which is a prediction value of the parameters; and a prediction value determination section configured to determine a prediction value of the parameter based on at least one of the first prediction value and the second prediction value.

The above information processing device may be such that the prediction value determination section is configured to: if input data inputted to the learned model by the second prediction section falls within a range of teaching data used for machine learning of the learned model, determine the second prediction value as the prediction value of the parameter; and if the input data inputted to the learned model by the second prediction section falls outside the range of the teaching data used for the machine learning of the learned model, determine the first prediction value as the prediction value of the parameter.

Further, the above information processing device may be configured to include: an operation mode identification section configured to identify an operation mode of the plant, wherein the first prediction section calculates the first prediction value by using a mathematical model corresponding to the operation mode identified by the operation mode identification section, and the second prediction section calculates the second prediction value by using a learned model corresponding to the operation mode identified by the operation mode identification section.

Still further, the above information processing device may include: an input data generation section configured to calculate at least part of input data for at least one of the mathematical model and the learned model, by using another mathematical model.

Yet further, the above information processing device may include: a plant control section configured to control the plant based on the prediction value determined by the prediction value determination section.

Further, the above information processing device may be configured such that the predetermined process includes a first sub-process and a second sub-process performed after the first sub-process, and the plant control section is configured to: perform control, regarding the first sub-process, for making the prediction value determined by the prediction value determination section closer to a predetermined target value; and perform control, regarding the second sub-process, for making the prediction value determined by the prediction value determination section closer to a predetermined target value.

Further, an information processing device in accordance with another aspect of the present invention includes: a first control value calculation section configured to, by using a mathematical model, calculate a first control value used for control of a predetermined process in a plant; a second control value calculation section configured to, by using a learned model obtained by modeling the process by machine learning, calculate a second control value used for control of the process; a control value determination section configured to determine a control value used for control of the plant based on at least one of the first control value and the second control value; and a plant control section configured to control the plant based on the control value.

The above information processing device may be configured to include: an operation mode identification section configured to identify an operation mode of the plant, wherein the plant control section controls the plant based on the operation mode identified by the operation mode identification section.

Further, an information processing method in accordance with an aspect of the present invention is a method for processing information by use of an information processing device, the method including: a first prediction step of, by using a mathematical model obtained by modeling a predetermined process in a plant, calculating a first prediction value, which is a prediction value of a predetermined parameter related to the process; a second prediction step of, by using a learned model obtained by modeling the process by machine learning, calculating a second prediction value, which is a prediction value of the parameters; and a prediction value determination step of determining a prediction value of the parameter based on at least one of the first prediction value and the second prediction value.

Further, the present invention also encompasses an information processing program for causing a computer to function as the information processing device, the program causing the computer to function as the first prediction section, the second prediction section, and the prediction value determination section.

The present invention is not limited to the embodiments, but can be altered by a skilled person in the art within the scope of the claims. The present invention also encompasses, in its technical scope, any embodiment derived by combining technical means disclosed in differing embodiments.

### Reference Signs List

- 1:: information processing device
- 11:: input data generation section
- 12:: first prediction section
- 13:: second prediction section
- 14:: operation mode identification section
- 15:: prediction value determination section
- 16:: plant control section
- 21:: first control value calculation section
- 22:: second control value calculation section
- 23:: control value determination section

## Claims

1. An information processing device (1) that predicts a parameter value related to a process in a plant, the information processing device (1) comprising:
(a) an input data generation section (11) configured to calculate at least part of input data for at least one of a first mathematical model and a learned model, by using a second mathematical model;
(b) a first prediction section (12) configured to input the input data generated by the input data generation section (11) to the first mathematical model obtained by modelling a predetermined process in the plant, and calculate a first prediction value, which is a prediction value of a predetermined parameter related to the process;
(c) a second prediction section (13) configured to input the input data generated by the input data generation section (11) to the learned model obtained by modelling the process by machine learning, and calculate a second prediction value, which is a prediction value of the said predetermined parameter related to the process;
(d) a prediction value determination section (15) configured to determine a third prediction value of the said predetermined parameter related to the process based on at least one of the first prediction value and the second prediction value; and
(e) a plant control section (16) configured to control the plant based on the third prediction value determined by the prediction value determination section (15),
**characterized in that** the prediction value determination section (15) is configured to:
determine the second prediction value as the third prediction value of the parameter, if input data inputted to the learned model by the second prediction section (13) falls within a range of teaching data used for machine learning of the learned model; and
determine the first prediction value as the third prediction value of the parameter, if the input data inputted to the learned model by the second prediction section (13) falls outside the range of the teaching data used for the machine learning of the learned model.

2. The information processing device according to claim 1, comprising:
an operation mode identification section (14) configured to identify an operation mode of the plant,
wherein the first prediction section (12) calculates the first prediction value by using a mathematical model corresponding to the operation mode identified by the operation mode identification section (14), and
the second prediction section (13) calculates the second prediction value by using a learned model corresponding to the operation mode identified by the operation mode identification section (14).

3. The information processing device according to claim 1 or 2, wherein the predetermined process includes a first sub-process and a second sub-process performed after the first sub-process, and
the plant control section (16) is configured to:
perform control, regarding the first sub-process, for making the prediction value determined by the prediction value determination section (15) closer to a predetermined target value; and
perform control, regarding the second sub-process, for making the prediction value determined by the prediction value determination section (15) closer to a predetermined target value.

4. A method for predicting a parameter value related to a process in a plant by use of an information processing device (1), the information processing device (1) comprising a control section (10) including an input data generation section (11), a first prediction section (12), a second prediction section (13), a prediction value determination section (15), a plant control section (16), a storage section (20), an input section (30) and a communication section (40),
the method comprising:
(a) calculating (S1) at least part of input data for at least one of a first mathematical model and a learned model, by using a second mathematical model;
(b) a first prediction step (S2) of inputting the input data generated by the input data generation section (11) to the first mathematical model obtained by modelling a predetermined process in the plant, and calculating a first prediction value, which is a prediction value of a predetermined parameter related to the process;
(c) a second prediction step (S3) of inputting the input data generated by the input data generation section (11) to the learned model obtained by modelling the process by machine learning, and calculating a second prediction value, which is a prediction value of the said predetermined parameter related to the process;
(d) a prediction value determination step (S4) of determining a third prediction value of the said predetermined parameter related to the process based on at least one of the first prediction value and the second prediction value; and
(e) controlling (S5) the plant based on the third prediction value determined in the prediction value determination step (S4),
**characterized in that**
in the prediction value determination step (S4):
the second prediction value is determined as the third prediction value of the parameter, if input data inputted to the learned model in the second prediction step (S3) falls within a range of teaching data used for machine learning of the learned model; and
the first prediction value is determined as the third prediction value of the parameter, if the input data inputted to the learned model in the second prediction step (S3) falls outside the range of the teaching data used for the machine learning of the learned model.

5. An information processing program comprising instructions which when carried out by an information processing device according to claim 1, cause the information processing device to carry out the steps of the method of claim 4.

## Patentansprüche

1. Informationsverarbeitungsvorrichtung (1), die einen Parameterwert in Bezug auf einen Prozess in einer Anlage voraussagt, wobei die Informationsverarbeitungsvorrichtung (1) umfasst:
(a) einen Eingabedaten-Erzeugungsabschnitt (11), der konfiguriert ist zum Berechnen wenigstens eines Teils von Eingabedaten für ein erstes mathematisches Modell und/oder ein gelerntes Modell unter Verwendung eines zweiten mathematischen Modells,
(b) einen ersten Voraussageabschnitt (12), der konfiguriert ist zum Eingeben der durch den Eingabedaten-Erzeugungsabschnitt (11) erzeugten Eingabedaten in das erste mathematische Modell, das durch das Modellieren eines vorbestimmten Prozesses in der Anlage erhalten wird, und zum Berechnen eines ersten Voraussagewerts, der ein Voraussagewert eines vorbestimmten Parameters in Bezug auf den Prozess ist,
(c) einen zweiten Voraussageabschnitt (13), der konfiguriert ist zum Eingeben der durch den Eingabedaten-Erzeugungsabschnitt (11) erzeugten Eingabedaten in das gelernte Modell, das durch das Modellieren des Prozesses mittels eines maschinellen Lernens erhalten wird, und zum Berechnen eines zweiten Voraussagewerts, der ein Voraussagewert des vorbestimmten Parameters in Bezug auf den Prozess ist,
(d) einen Voraussagewert-Bestimmungsabschnitt (15), der konfiguriert ist zum Bestimmen eines dritten Voraussagewerts des vorbestimmten Parameters in Bezug auf den Prozess basierend auf dem ersten Voraussagewert und/oder dem zweiten Voraussagewert, und
(e) einen Anlagensteuerabschnitt (16), der konfiguriert ist zum Steuern der Anlage basierend auf dem dritten Voraussagewert, der durch den Voraussagewert-Bestimmungsabschnitt (15) bestimmt wird,
**dadurch gekennzeichnet, dass** der Voraussagewert-Bestimmungsabschnitt (15) konfiguriert ist zum:
Bestimmen des zweiten Voraussagewerts als des dritten Voraussagewerts des Parameters, wenn durch den zweiten Voraussageabschnitt (13) in das gelernte Modell eingegebene Eingabedaten in einen Bereich von für das maschinelle Lernen des gelernten Modells verwendeten Lehrdaten fallen, und
Bestimmen des ersten Voraussagewerts als des dritten Voraussagewerts des Parameters, wenn die durch den zweiten Voraussageabschnitt (13) in das gelernte Modell eingegebenen Eingabedaten außerhalb des Bereichs der für das maschinelle Lernen des gelernten Modells verwendeten Lehrdaten fallen.

2. Informationsverarbeitungsvorrichtung nach Anspruch 1, umfassend:
einen Betriebsmodus-Identifikationsabschnitt (14), der konfiguriert ist zum Identifizieren eines Betriebsmodus der Anlage,
wobei der erste Voraussageabschnitt (12) den ersten Voraussagewert unter Verwendung eines mathematischen Modells in Entsprechung zu dem durch den Betriebsmodus-Identifikationsabschnitt (14) identifizierten Beetriebsmodus berechnet, und
wobei der zweite Voraussageabschnitt (13) den zweiten Voraussagewert unter Verwendung eines gelernten Modells in Entsprechung zu dem durch den Betriebsmodus-Identifikationsabschnitt (14) identifizierten Betriebsmodus berechnet.

3. Informationsverarbeitungsvorrichtung nach Anspruch 1 oder 2, wobei der vorbestimmte Prozess einen ersten Subprozess und einen zweiten Subprozess, der nach dem ersten Subprozess durchgeführt wird, umfasst, und
wobei der Anlagensteuerabschnitt (16) konfiguriert ist zum:
Durchführen einer Steuerung in Bezug auf den ersten Subprozess, um den durch den Voraussagewert-Bestimmungsabschnitt (15) bestimmten Voraussagewert an einen vorbestimmten Zielwert anzunähern, und
Durchführen einer Steuerung in Bezug auf den zweiten Subprozess, um den durch den Voraussagewert-Bestimmungsabschnitt (15) bestimmten Voraussagewert an einen vorbestimmten Zielwert anzunähern.

4. Verfahren zum Voraussagen eines Parameterwerts in Bezug auf einen Prozess in einer Anlage unter Verwendung einer Informationsverarbeitungsvorrichtung (1), wobei die Informationsverarbeitungsvorrichtung (1) einen Steuerabschnitt (10) umfasst, der einen Eingabedaten-Erzeugungsabschnitt (11), einen ersten Voraussageabschnitt (12), einen zweiten Voraussageabschnitt (13), einen Voraussagewert-Bestimmungsabschnitt (15), einen Anlagensteuerabschnitt (16), einen Speicherabschnitt (20), einen Eingabeabschnitt (30) und einen Kommunikationsabschnitt (40) umfasst,
wobei das Verfahren umfasst:
(a) Berechnen (S1) wenigstens eines Teils von Eingabedaten für ein erstes mathematisches Modell und/oder ein gelerntes Modell unter Verwendung eines zweiten mathematischen Modells,
(b) einen ersten Voraussageschritt (S2) zum Eingeben der durch den Eingabedaten-Erzeugungsabschnitt (11) erzeugten Eingabedaten in das erste mathematische Modell, das durch das Modellieren eines vorbestimmten Prozesses in der Anlage erhalten wird, und zum Berechnen eines ersten Voraussagewerts, der ein Voraussagewert eines vorbestimmten Parameters in Bezug auf den Prozess ist,
(c) einen zweiten Voraussageschritt (S3) zum Eingeben der durch den Eingabedaten-Erzeugungsabschnitt (11) erzeugten Eingabedaten in das gelernte Modell, das durch das Modellieren des Prozesses durch ein maschinelles Lernen erhalten wird, und zum Berechnen eines zweiten Voraussagewerts, der ein Voraussagewert des vorbestimmten Parameters in Bezug auf den Prozess ist,
(d) einen Voraussagewert-Bestimmungsschritt (S4) zum Bestimmen eines dritten Voraussagewerts des vorbestimmten Parameters in Bezug auf den Prozess basierend auf dem ersten Voraussagewert und/oder dem zweiten Voraussagewert, und
(e) Steuern (S5) der Anlage basierend auf dem in dem Voraussagewert-Bestimmungsschritt (S4) bestimmten dritten Voraussagewert,
**dadurch gekennzeichnet, dass**
in dem Voraussagewert-Bestimmungsschritt (S4):
der zweite Voraussagewert als der dritte Voraussagewert des Parameters bestimmt wird, wenn in dem zweiten Voraussageschritt (S3) in das gelernte Modell eingegebene Eingabedaten in einen Bereich von durch das maschinelle Lernen des gelernten Modells verwendeten Lehrdaten fallen, und
der erste Voraussagewert als der dritte Voraussagewert des Parameters bestimmt wird, wenn die in dem zweiten Voraussageschritt (S3) in das gelernte Modell eingegebenen Eingabedaten außerhalb der für das maschinelle Lernen des gelernten Modells verwendeten Lehrdaten fallen.

5. Informationsverarbeitungsprogramm, das Befehle enthält, die bei einer Ausführung durch eine Informationsverarbeitungsvorrichtung gemäß Anspruch 1 die Informationsverarbeitungsvorrichtung zum Ausführen der Schritte des Verfahrens von Anspruch 4 veranlassen.

## Revendications

1. Dispositif de traitement d'informations (1) qui prédit la valeur d'un paramètre relatif à un processus dans une usine, le dispositif de traitement d'informations (1) comprenant :
(a) une section de génération de données d'entrée (11) configurée pour calculer au moins une partie de données d'entrée pour l'un au moins d'un premier modèle mathématique et d'un modèle appris, à l'aide d'un second modèle mathématique ;
(b) une première section de prédiction (12) configurée pour entrer les données d'entrée générées par la section de génération de données d'entrée (11) dans le premier modèle mathématique obtenu en modélisant un processus prédéterminé dans l'usine, et pour calculer une première valeur de prédiction, qui est une valeur de prédiction d'un paramètre prédéterminé relatif au processus ;
(c) une seconde section de prédiction (13) configurée pour entrer les données d'entrée générées par la section de génération de données d'entrée (11) dans le modèle appris en modélisant le processus par apprentissage automatique, et pour calculer une deuxième valeur de prédiction, qui est une valeur de prédiction dudit paramètre prédéterminé relatif au processus ;
(d) une section de détermination de valeur de prédiction (15) configurée pour déterminer une troisième valeur de prédiction dudit paramètre prédéterminé relatif au processus sur la base de l'une au moins parmi la première valeur de prédiction et la deuxième valeur de prédiction ; et
(e) une section de commande d'usine (16) configurée pour commander l'usine sur la base de la troisième valeur de prédiction déterminée par la section de détermination de valeur de prédiction (15),
**caractérisé en ce que** la section de détermination de valeur de prédiction (15) est configurée pour :
déterminer la deuxième valeur de prédiction en tant que troisième valeur de prédiction du paramètre, si les données d'entrée entrées dans le modèle appris par la seconde section de prédiction (13) se situent dans une plage de données d'apprentissage utilisées pour l'apprentissage automatique du modèle appris ; et
déterminer la première valeur de prédiction en tant que troisième valeur de prédiction du paramètre, si les données d'entrée entrées dans le modèle appris par la seconde section de prédiction (13) se situent en dehors de la plage de données d'apprentissage utilisées pour l'apprentissage automatique du modèle appris.

2. Dispositif de traitement d'informations selon la revendication 1, comprenant :
une section d'identification de mode de fonctionnement (14) configurée pour identifier un mode de fonctionnement de l'usine,
dans lequel la première section de prédiction (12) calcule la première valeur de prédiction à l'aide d'un modèle mathématique correspondant au mode de fonctionnement identifié par la section d'identification de mode de fonctionnement (14), et
la seconde section de prédiction (13) calcule la deuxième valeur de prédiction à l'aide d'un modèle appris correspondant au mode de fonctionnement identifié par la section d'identification de mode de fonctionnement (14).

3. Dispositif de traitement d'informations selon la revendication 1 ou 2, dans lequel le processus prédéterminé comporte un premier sous-processus et un second sous-processus mis en œuvre après le premier sous-processus, et
la section de commande d'usine (16) est configurée pour :
effectuer une commande, relative au premier sous-processus, destinée à rendre la valeur de prédiction déterminée par la section de détermination de valeur de prédiction (15) plus proche d'une valeur cible prédéterminée ; et
effectuer une commande, relative au second sous-processus, destinée à rendre la valeur de prédiction déterminée par la section de détermination de valeur de prédiction (15) plus proche d'une valeur cible prédéterminée.

4. Procédé de prédiction de la valeur d'un paramètre relatif à un processus dans une usine en utilisant un dispositif de traitement d'informations (1), le dispositif de traitement d'informations (1) comprenant une section de commande (10) comportant une section de génération de données d'entrée (11), une première section de prédiction (12), une seconde section de prédiction (13), une section de détermination de valeur de prédiction (15), une section de commande d'usine (16), une section de stockage (20), une section d'entrée (30) et une section de communication (40),
le procédé comprenant :
(a) le calcul (S1) d'au moins une partie de données d'entrée pour l'un au moins parmi un premier modèle mathématique et un modèle appris, à l'aide d'un second modèle mathématique ;
(b) une première étape de prédiction (S2) consistant à entrer les données d'entrée générées par la section de génération de données d'entrée (11) dans le premier modèle mathématique obtenu en modélisant un processus prédéterminé dans l'usine, et à calculer une première valeur de prédiction, qui est une valeur de prédiction d'un paramètre prédéterminé relatif au processus ;
(c) une seconde étape de prédiction (S3) consistant à entrer les données d'entrée générées par la section de génération de données d'entrée (11) dans le modèle appris en modélisant le processus par apprentissage automatique, et à calculer une deuxième valeur de prédiction, qui est une valeur de prédiction dudit paramètre prédéterminé relatif au processus ;
(d) une étape de détermination de valeur de prédiction (S4) consistant à déterminer une troisième valeur de prédiction dudit paramètre prédéterminé relatif au processus sur la base de l'une au moins parmi la première valeur de prédiction et la deuxième valeur de prédiction ; et
(e) la commande (S5) de l'usine sur la base de la troisième valeur de prédiction déterminée au cours de l'étape de détermination de valeur de prédiction (S4),
**caractérisé en ce que**
au cours de l'étape de détermination de valeur de prédiction (S4) :
la deuxième valeur de prédiction est déterminée en tant que troisième valeur de prédiction du paramètre, si les données d'entrée entrées dans le modèle appris au cours de la seconde étape de prédiction (S3) se situent dans une plage de données d'apprentissage utilisées pour l'apprentissage automatique du modèle appris ; et
la première valeur de prédiction est déterminée en tant que troisième valeur de prédiction du paramètre, si les données d'entrée entrées dans le modèle appris au cours de la seconde étape de prédiction (S3) se situent en dehors de la plage des données d'apprentissage utilisées pour l'apprentissage automatique du modèle appris.

5. Programme de traitement d'informations comprenant des instructions qui, lorsqu'elles sont mises en œuvre par un dispositif de traitement d'informations selon la revendication 1, amènent le dispositif de traitement d'informations à mettre en œuvre les étapes du procédé selon la revendication 4.
